# EUROPÄISCHE PATENTSCHRIFT

(11) **EP 3 215 771 B1**
(45) Veröffentlichungstag und Bekanntmachung des Hinweises auf die Patenterteilung: **04.11.2020**
(21) Anmeldenummer: 15774878.1
(22) Anmeldetag: 16.09.2015
(51) Int. Cl.: F16K 1/38, F16K 1/42, F16K 25/00, F16K 31/06, F04B 27/18

(54) **PROPORTIONALVENTIL, KLIMAKOMPRESSORANORDNUNG SOWIE BETRIEBSVERFAHREN**
PROPORTIONAL VALVE, AIR-CONDITIONER COMPRESSOR ARRANGEMENT, AND OPERATING METHOD
SOUPAPE PROPORTIONNELLE, ENSEMBLE COMPRESSEUR DE CLIMATISATION ET PROCÉDÉ DE FONCTIONNEMENT

(30) Priorität: 06.11.2014 DE 102014116214
(43) Veröffentlichungstag der Anmeldung: 13.09.2017
(73) Patentinhaber: Eto Magnetic GmbH, 78333 Stockach (DE)
(72) Erfinder: FANGAUER, Philipp, 78465 Konstanz (DE); VINCON, Peter, 78333 Stockach (DE)
(74) Vertreter: Patentanwälte Behrmann Wagner PartG mbB
(86) Internationale Anmeldenummer: PCT/EP2015/071219
(87) Internationale Veröffentlichungsnummer: WO 2016/071030

(56) Entgegenhaltungen:
- EP-A2- 1 628 017
- EP-B1- 1 098 091
- DE-A1- 2 329 639
- DE-A1- 10 237 364
- DE-A1- 19 727 785
- US-A1- 2003 223 883

## Beschreibung

Die Erfindung betrifft ein elektromagnetisch aktuierbares Proportionalventil, insbesondere ein Druckdifferenzventil für den Einsatz in CO₂-Klimakompressoranordnungen, gemäß dem Oberbegriff des Anspruchs 1, umfassend einen elektromagnetischen Aktuator zum Verstellen eines Ventilkörpers relativ zu einem Ventilsitz, wobei dem Ventilsitz ein erster Druckanschluss zugeordnet ist, über den ein Fluid am Ventilköper vorbei zu einem zweiten Druckanschluss strömen kann. Ferner betrifft die Erfindung eine Klimakompressoranordnung (Klimaanlage), insbesondere in einem Kraftfahrzeug, gemäß Anspruch 10 sowie ein Verfahren gemäß Anspruch 12 zum Betreiben eines elektromagnetisch aktuierten Proportionalventils und/oder einer Klimakompressoranordnung.

Aus der EP 1 628 017 A2 und der EP 1 098 091 B1 sind als Druckdifferenzventile ausgebildete Proportionalventile für Klimakompressoranordnungen in Kraftfahrzeugen bekannt. Die bekannten Proportionalventile dienen dazu, die Kühlleistung des direkt mit einem Kfz-Antriebsmotor über einen Riemen gekoppelten Kompressors (Klimakompressors) zu regeln. Mittels eines elektromagnetischen Aktuators ist im Fall der aus der EP 1 628 017 A2 bekannten Vorrichtung als Ventilkugel und im Fall der aus der EP 1 098 091 B1 bekannten Vorrichtung ein als Ventilstößel ausgebildeter Ventilkörper relativ zu einem einem Hochdruckanschluss (Kompressorförderdruckanschluss) zugeordneten Ventilsitz verstellbar. Bei beiden vorbekannten Proportionalventilen verschließt der Ventilkörper bei Anlage an dem Ventilsitz die Fluidverbindung zwischen dem vorgenannten Hochdruckanschluss und einem auf einem geringeren Druck liegenden Kurbelwellendruckanschluss fluiddicht. Somit wirkt auf den Ventilkörper der volle am Hochdruckanschluss anliegende Fluiddruck, welcher zum Schließen des Proportionalventils bzw. des Hochdruckanschlusses von dem elektromagnetischen Aktuator überwunden werden muss.

Als nachteilig bei den bekannten Druckdifferenzventilen wird die vergleichsweise große Magnetkraft empfunden, die benötigt wird, um den Ventilkörper relativ zum Ventilsitz zu verstellen. Dies führt bei den bekannten Konstruktionen zu vergleichsweise großen Spulenanordnungen und großen Ankern, wodurch insgesamt ein für Kfz-Anwendungen nicht in beliebiger Größe zur Verfügung stehender Bauraum benötigt wird. Auch ist zwangsläufig die bewegte Masse des Ankers vergleichsweise groß, was zu entsprechenden Nachteilen einer großen bewegten Masse führt.

Aus der US 2003/0223883 A1 und der DE 23 29 639 A1 sind elektromagnetisch aktuierbare Proportionalventile mit Diffusorraum bekannt. Die Diffusorwirkung scheint verbesserungswürdig. Weiter sind aus dem Stand der Technik die DE 197 27 785 A1 und die DE 102 37 364 A1 bekannt.

Ausgehend von dem vorgenannten Stand der Technik liegt der Erfindung daher die Aufgabe zugrunde, ein alternatives elektromagnetisch aktuiertes Proportionalventil, insbesondere eine Druckdifferenzventil für den Einsatz in CO₂-Kompressoren anzugeben, welches sich durch eine geringe Magnetkraft zum Verstellen des Ventilkörpers auszeichnet und damit die Möglichkeit zu einer Bauraumoptimierung bietet. Ferner besteht die Aufgabe darin, eine entsprechend verbesserte, bevorzugt bauraumoptimierte Klimakompressoranordnung sowie ein Verfahren zum Betreiben eines derartigen Proportionalventils und/oder einer solchen Klimakompressoranordnung anzugeben.

Diese Aufgabe wird hinsichtlich des Proportionalventils mit den Merkmalen des Anspruchs 1 gelöst, d.h. bei einem gattungsgemäßen Proportionalventil dadurch, dass von dem, vorzugsweise als Ventilstößel ausgebildeten, Ventilkörper ein Diffusorraum begrenzt ist, der bei an dem Ventilsitz anliegendem Ventilkörper fluidleitend mit dem ersten Druckanschluss über eine von den Ventilkörper begrenzte Fluidverbindung verbunden ist. Dabei ist bevorzugt im Betrieb der an dem ersten Druckanschluss anliegende Fluiddruck größer als der an dem zweiten Druckanschluss anliegende Fluiddruck.

Hinsichtlich der Klimakompressoranordnung wird die Aufgabe mit den Merkmalen des Anspruchs 10 gelöst und hinsichtlich des Betriebsverfahrens mit den Merkmalen des Anspruchs 12, d.h. bei einem gattungsgemäßen Verfahren dadurch, dass der Diffusorraum bei an dem Ventilsitz anliegendem Ventilkörper (und vorzugsweise auch bei von dem Ventilsitz abgehobenem Ventilkörper) mit Fluid, insbesondere einem CO₂-Ölgemisch, aus dem ersten Druckanschluss versorgt wird, welches weiter zum zweiten Druckanschluss strömt und durch Durchströmen des Diffusorraums die von dem ersten Fluidanschluss auf den Ventilkörper wirkende Fluiddruckkraft reduziert.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Mittels des nach dem Konzept der Erfindung ausgebildeten Proportionalventils, insbesondere einem Druckdifferenzventil für den Einsatz in CO₂-Klimakompressoren, kann proportional zu dem an einer Spulenanordnung des elektromagnetischen Aktuators angelegten Strom eine Druckdifferenz zwischen dem ersten und dem zweiten Druckanschluss eingestellt werden, wobei das Proportionalventil im Betrieb vom ersten Druckanschluss in Richtung zum zweiten Druckanschluss mittels eines Fluids, insbesondere bei der bestimmungsgemäßen Anwendung mit einem CO₂-Ölgemisch, durchströmt ist. Für den später noch zu erläuternden, bevorzugten Fall wird im Rahmen des Gesamtsystems bzw. einer Klimakompressoranordnung durch Einstellung der Druckdifferenz zwischen dem ersten und dem zweiten Druckanschluss eine Druckdifferenz zwischen dem ersten Druckanschluss und einem bevorzugt vorgesehenen, dritten Druckanschluss, insbesondere einem Sauganschluss des Kompressors eingestellt, welcher selbst nicht in der Fluidströmung des Proportionalventils liegt sondern bevorzugt als Druckrückführung genutzt wird. Wie später noch erläutert werden wird ist der bevorzugt vorgesehene dritte Druckanschluss so angeordnet, dass der an diesem anliegende Fluiddruck, vorzugsweise mittelbar über mindestens einen Stößel (Kraftübertragungsstößel) auf den Ventilkörper in Richtung auf den Ventilsitz wirkt. Bevorzugt ist während des Betriebs der Druck am ersten Druckanschluss höher als am zweiten Druckanschluss und dieser wiederum höher als an dem fakultativen dritten Druckanschluss.

Der Erfindung liegt der Gedanke zugrunde, zur Reduzierung der den Ventilkörper von dem Ventilsitz axial weg beaufschlagenden, aus dem am ersten Druckanschluss anliegenden Fluiddruck resultierenden Fluiddruckkraft dadurch zu reduzieren, dass von dem Ventilkörper (und einem weiteren statisch angeordneten Bauteil, insbesondere einem den Ventilsitz aufweisenden Blendenbauteil) ein, vorzugsweise unmittelbar an dem Ventilsitz angrenzender, Diffusorraum begrenzt wird, der so beschaffen ist, dass bei dessen Durchströmung mit einem Fluid vom ersten zum zweiten Druckanschluss ein Niederdruckgebiet am Ventilkörper, insbesondere an einer von dem elektromagnetischen Aktuator abgewandten Fläche, bevorzugt einer Kegelfläche des Ventilkörpers, resultiert, welches die bei herkömmlichen Konstruktionen ohne einen solchen Diffusor verursachten, auf den Fluiddruck am ersten Druckanschluss zurückgehenden Druckkräfte, insbesondere auf einen vernachlässigbaren Wert, reduziert. Um eine derartige Druckkraftreduktion bzw. die Aufrechterhaltung eines Niederdruckgebietes bei an dem Ventilsitz anliegenden Ventilkörper zu gewährleisten, ist weiter erfindungsgemäß vorgesehen, dass das Proportionalventil zu keinem Betriebszeitpunkt vollständig geschlossen ist, sondern dass selbst bei an dem Ventilsitz anliegenden Ventilkörper, insbesondere einen Ventilstößel, ein Fluid- bzw. Massenstrom vom ersten Druckanschluss zum zweiten Druckanschluss gegeben ist, welcher für die Aufrechterhaltung eines Diffusoreffektes und damit für eine Druckkraftabsenkung am Ventilkörper Sorge trägt. Dies wird dadurch erreicht, dass von dem Ventilkörper (und einem weiteren, vorzugsweise den Ventilsitz ausbildenden Bauteil, beispielsweise an einem Blendenbauteil) eine in den Diffusorraum mündende Fluidverbindung, insbesondere ein Fluidkanal begrenzt ist, der den ersten Druckanschluss dauerhaft, d.h. auch bei an dem Ventilsitz anliegenden Ventilkörper mit dem, bevorzugt dem Ventilsitz in Strömungsrichtung des Fluids zum zweiten Druckanschluß nachgeordneten Diffusorraum und über diesen mit dem, zweiten Druckanschluss verbindet.

Dadurch, dass der Einfluss des Fluiddrucks am ersten Druckanschluss auf den Ventilkörper, insbesondere bei an dem Ventilsitz anliegenden Ventilkörper, reduziert ist, wird zum Verstellen des Ventilkörpers relativ zum Ventilsitz, insbesondere zum axialen Verstellen des Ventilkörpers in Richtung Ventilsitz, eine geringere Magnetkraft benötigt, wodurch der elektromagnetische Aktuator und bei diesem insbesondere eine elektrische Spulen- bzw. Wicklungsanordnung und/oder ein Anker durch Bestromen der Spulenanordnung axial verstellbar kleinvolumiger dimensioniert werden können/kann.

Das Vorsehen einer, bevorzugt direkt, in den Diffusorraum mündenden bzw. diesen mit dem ersten Druckanschluss bei an dem Ventilsitz anliegenden Ventilkörper verbindenden Fluidverbindung hat über die vorstehend erläuterten Vorteile hinaus weitere Vorteile. So weist das erfindungsgemäße Proportionalventil ein stetiges Schaltverhalten auf - d.h. Drucksprünge, wie sie bei einer Trennung einer fluidleitenden Verbindung zwischen dem ersten Druckanschluss und dem Diffusorraum bei einem vollständig schließbaren Ventil beim Öffnen und Schließen auftreten würden, werden vermieden. Zudem wird durch den dauerhaft aufrecht erhaltenen Massenstrom bzw. Fluidstrom sichergestellt, dass ein fluidleitend mit dem Proportionalventil verbundener (Klima-)Kompressor nie trocken läuft.

Als besonders vorteilhaft im Hinblick auf die Ausgestaltung des Diffusorraums, insbesondere aus fertigungstechnischer Sicht, hat es sich herausgestellt, dass der Ventilkörper in einem den Diffusorraum begrenzenden Abschnitt, bevorzugt im gesamten, den Diffusorraum begrenzenden Abschnitt, eine konische Mantelfläche aufweist, mit welcher er den Diffusorraum begrenzt.

Weiter optimiert wird die Ausbildung des Diffusorraums erfindungsgemäß dadurch, dass nicht nur der Ventilkörper abschnittsweise eine Konusform aufweist, sondern dass der Diffusorraum, dem Ventilkörper gegenüberliegend von einer Innenkonusfläche begrenzt wird, in die der Ventilkörper in einem an dem Ventilsitz anliegenden Zustand eingetaucht ist, wobei zur Ausbildung des ein Niederdruckgebiet am Ventilkörper ausbildenden Diffusorraums sich ein Konuswinkel der konischen Mantelfläche, d.h. eines Kegelabschnittes des Ventilkörpers und der Konuswinkel der den Diffusorraum dem Ventilkörper gegenüberliegend begrenzenden Innenkonusfläche unterschiedlich sind, sodass sich der Diffusorraum in der Strömungsrichtung des Fluids vom ersten Druckanschluss weg erweitert. Dies wird dadurch erreicht, dass der Konuswinkel der Konusfläche des Ventilkörpers kleiner gewählt ist als der Konuswinkel (Innenkonuswinkel) der Innenkonusfläche. Unter dem Konuswinkel der konischen Mantelfläche des Ventilkörpers wird dabei der Winkel zwischen dieser Mantelfläche und einer Längsachse des Konus, insbesondere einer Längsmittelachse des Ventilkörpers verstanden. Unter dem Konuswinkel (Innenkonuswinkel) der Innenkonusfläche wird der Winkel zwischen dieser und einer Längsachse des Innenkonus verstanden, die vorzugsweise mit der Längsmittelachse des Ventilkörpers zusammenfällt. Bevorzugt beträgt die Winkeldifferenz der vorgenannten Konuswinkel zwischen 0,1° und 30°, vorzugsweise zwischen 0,5° und 10°.

Konstruktiv als besonders vorteilhaft hat es sich herausgestellt, wenn die vorerwähnte Innenkonusfläche an einem den Ventilsitz ausbildenden Blendenbauteil realisiert ist. Mit anderen Worten weist ein den Ventilsitz ausbildendes Blendenbauteil eine innenkonische Vertiefung auf, in welche der Ventilkörper eingetaucht ist, um an dem Ventilsitz anzulegen. Die Innenkonusfläche des Blendenbauteils umgibt somit den Ventilkörper also abschnittsweise radial außen.

Die zuvor erwähnte Bildung des Diffusorraums zwischen zwei Konusflächen bzw. zwischen einer Konusfläche des Ventilkörpers und einer Innenkonusfläche eines ortsfesten Bauteils ist insbesondere fertigungstechnisch von Vorteil - auf eine derartige Ausgestaltung ist die Erfindung jedoch nicht beschränkt. Insbesondere ist auch die Realisierung eines Diffusorraums mit leichten Krümmungen möglich. Wesentlich ist, dass eine Diffusorwirkung gegeben ist, die für ein Niederdruckgebiet am Ventilkörper Sorge trägt, welcher die auf den Ventilkörper in Richtung von dem Ventilsitz weg wirkende Druckkraft im Vergleich zu einer Ausführungsform ohne Diffusorraum reduziert. Unabhängig von der konkreten Geometrie des den Diffusorraum begrenzenden Mantelflächenabschnitts des Ventilkörpers und eines gegenüberliegenden Wandabschnittes eines weiteren Bauteils, insbesondere eines Blendenbauteils hat es sich als vorteilhaft erwiesen, wenn sich der Diffusorraum mit einem Öffnungswinkel bei an dem Ventilsitz anliegendem Ventilkörper, vorzugsweise einen über die Längserstreckung des Diffusorraums gleichbleibenden oder über die vorgenannte Längserstreckung gemittelten Öffnungswinkel aus einem Wertebereich zwischen 10° und 35°, vorzugsweise zwischen 15° und 25°, öffnet. Dabei erstreckt sich der Diffusorraum bevorzugt über eine Länge zwischen 0,5mm und 10mm, weiter bevorzugt zwischen 1mm und 4mm, wobei diese Länge bevorzugt gemessen ist entlang einer Winkelhalbierenden des vorgenannten, insbesondere gleichbleibenden oder gemittelten, Öffnungswinkel des Diffusorraums.

Im Hinblick auf die konkrete Ausgestaltung der Fluidverbindung zum Erzeugen eines dauerhaften Fluidstroms vom ersten zum zweiten Druckanschluss gibt es unterschiedliche Möglichkeiten. Fertigungstechnisch ist es vorteilhaft, eine entsprechende Verbindung, insbesondere einen, bevorzugt nutförmigen Fluidkanal durch Materialumformung herzustellen. Hierzu kann eine oder können mehrere Einformung(en) ausschließlich am Ventilkörper, insbesondere an einem Kegelabschnitt des Ventilkörpers, vorgesehen werden oder ausschließlich an einem gegenüberliegenden Bauteil, insbesondere einem den Ventilsitz für den Ventilkörper ausbildenden Blendenbauteil. Alternativ ist es auch möglich, mindestens eine entsprechende Einformung an beiden Teilen, d.h. dass sowohl am Ventilkörper als auch an dem gegenüberliegenden Bauteil, insbesondere im Bereich eines Innenkonus vorgesehen werden. Für die Herstellung mindestens einer entsprechenden Einformung, insbesondere mindestens einer Kerbe an dem den Ventilkörper gegenüberliegenden Bauteil, insbesondere dem vorgenannten Blendenbauteil, hat es sich als besonders vorteilhaft herausgestellt, wenn zunächst eine Innenkonusfläche, d.h. ein Blendenkegel in das entsprechende Bauteil eingebracht, insbesondere vorgedreht wird. Anschließend wird die Fluidverbindungsgeometrie, d.h. eine Bypassgeometrie mit einem kegelförmigen, vorzugsweise drahterodierten Stempel mit mindestens einem Wulst, der die Negativkontur der Prägung, d.h. der späteren Fluidverbindung darstellt, Kraft-Weg-überwacht in den Innenkonus bzw. in die Blende eingedrückt. Zur Vermeidung einer verschlechterten Ventilhysterese durch den bei diesem Prägevorgang entstehenden Aufwurf hat es sich als vorteilhaft herausgestellt, nach dem vorgenannten Prägevorgang mit einem zweiten, insbesondere kegelförmigen Stempel, der diesmal entsprechende Wülste nicht aufweist, erneut zu prägen, um den Aufwurf zu reduzieren und insgesamt die Oberfläche zu optimieren.

Auch ist es möglich, eine Fluidverbindung durch die Realisierung einer Abflachung am Ventilkörper, insbesondere in einem Kegelabschnitt des Ventilkörpers zu realisieren. Zusätzlich oder alternativ ist es möglich, mindestens eine Erhebung, vorzugsweise mehrere gleichmäßig über den Umfang des Ventilkörpers verteilt angeordnete Erhebungen zu realisieren, mit denen der Ventilkörper an dem gegenüberliegenden Bauteil, insbesondere einem Blendenbauteil anschlägt. Durch die mindestens eine Erhebung wird ein definierter Abstand; insbesondere zwischen einem Kegelabschnitt des Ventilkörpers und dem gegenüberliegenden Bauteil geschaffen bzw. definiert, der dann die Fluidverbindung bei an dem Ventilsitz anliegendem Ventilkörper bildet. Zusätzlich oder alternativ zu mindestens einer Erhebung am Ventilkörper kann mindestens eine, oder können vorzugsweise mehrere gleichmäßig über den Umfang verteilt angeordnete, Erhebungen an dem dem Ventilkörper gegenüberliegenden Bauteil vorgesehen werden, welche bzw. die dann den Ventilsitz für den Ventilkörper ausbilden und die für eine dauerhafte Beabstandung des Ventilkörpers von dem Bauteil zur Schaffung der Fluidverbindung Sorge tragen.

Wie eingangs erwähnt, umfasst das elektromagnetisch aktuierte Proportionalventil in Weiterbildung der Erfindung, insbesondere für den Einsatz als Druckdifferenzventil in CO₂₋Klimakompressoren, einen dritten Druckanschluss, insbesondere einen Sauganschluss, der mit einem Raum des Ventils verbunden ist auf einer von dem Ventilsitz abgewandten Seite des Ventilkörpers, sodass ein in dem Raum über den dritten Druckanschluss anliegender, vorzugsweise im Vergleich zu dem an dem ersten Druckanschluss anliegenden Druck reduzierter Druck mittelbar, insbesondere über einen zusätzlichen Stößel auf dem Ventilkörper wirken kann. Bevorzugt ist in dem vorgenannten Raum ein durch Bestromen einer Spulenanordnung des elektromagnetischen Aktuators verstellbarer Anker des Aktuators angeordnet, welcher weiter bevorzugt druckausgeglichen in dem Raum angeordnet ist.

Als besonders vorteilhaft hat es sich erwiesen, wenn der Ventilkörper, vorzugsweise entgegen der Kraft einer Rückstellfeder, durch Bestromen der Spulenanordnung des elektromagnetischen Aktuators auf den Ventilsitz verstellbar ist, so dass das Ventil bei Nichtbestromung maximal geöffnet ist.

Die Erfindung führt auch auf eine, bevorzugt in einem Kraftfahrzeug angeordnete und/oder anordenbare, Klimakompressoranordnung mit einem als Druckdifferenzventil ausgebildeten, zuvor beschriebenen Proportionalventil und einem Klimakompressor (Kompressor), welcher bevorzugt direkt, beispielsweise einen Riemen von einem Antriebsmotor des Kraftfahrzeugs antreibbar und/oder angetrieben ist. An dem ersten Druckanschluss liegt (im Betrieb) ein Förderdruck des Klimakompressors an und an dem zweiten Druckanschluss (im Betrieb) ein Kurbelwellendruck. Für den bevorzugten Fall des Vorsehens eines dritten Druckanschluss zur mittelbaren oder unmittelbaren Beaufschlagung des Ventilskörpers auf einer von dem Ventilsitz abgewandeten Seite liegt an diesem ein Saugdruck des Klimakompressors an bzw. ist dort anlegbar.

Die Erfindung führt auch auf ein Verfahren zum Betreiben eines nach dem Konzept der Erfindung ausgebildeten Proportionalventils und/oder einer nach dem Konzept ausgebildeten Klimakompressoranordnung. Wesentlich ist, dass der Diffusorraum bei an dem Ventilsitz anliegendem Ventilkörper mit Fluid, insbesondere einem CO₂-Ölgemisch, aus dem Druckanschluss versorgt wird, welches weiter zum zweiten Druckanschluss strömt und durch Durchströmen des Diffusorraums (durch Ausbildung eines Niederdruckgebietes am Ventilkörper) die von dem ersten Fluiddruckanschluss auf den Ventilkörper wirkende Fluidkraft (im Vergleich zu einer Bauform ohne Diffusorraum und bei an dem Ventilsitz anliegenden Ventilkörper bzw. dauerhaft geöffneten und von dem Ventilkörper begrenzten Fluidverbindung) reduziert.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Längsschnittansicht einer bevorzugten Ausführungsform eines nach dem Konzept der Erfindung ausgebildeten elektromagnetisch aktuierten Proportionalventils,
- Fig. 2a bis 2d:: unterschiedliche Ansichten eines einen Diffusorraum des Proportionalventils begrenzenden Bauteils, hier eines Blendenbauteils,
- Fig. 3a bis 3d:: unterschiedliche Ansichten einer möglichen Bauform eines stößeiförmigen Ventilkörpers,

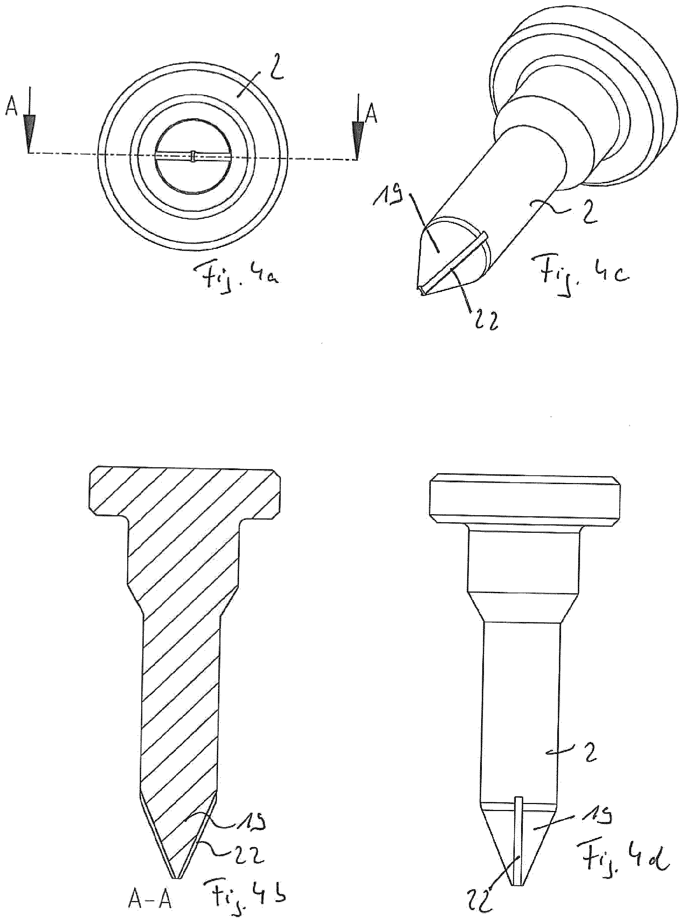

- Fig. 4a bis 4d:: unterschiedliche Darstellungen einer alternativen Ausführungsform eines Ventilkörpers mit nutartigen Einformungen zur Begrenzung der Fluidverbindung,
- Fig. 5a bis 5d.: vier unterschiedliche Ansichten einer weiteren alternativen Ausführungsform eines Ventilkörpers mit seitlichen Abflachungen in einem Kegelabschnitt zur Begrenzung der Fluidverbindung, und
- Fig. 6a bis 6d:: unterschiedliche Ansichten einer Anordnung von Ventilkörper und einem weiteren Bauteil, hier beispielhaft eines Blendenbauteils zur Begrenzung eines Diffusorraums sowie einer Fluidverbindung.

In den Figuren sind gleiche Elemente und Elemente mit der gleichen Funktion mit den gleichen Bezugszeichen gekennzeichnet.

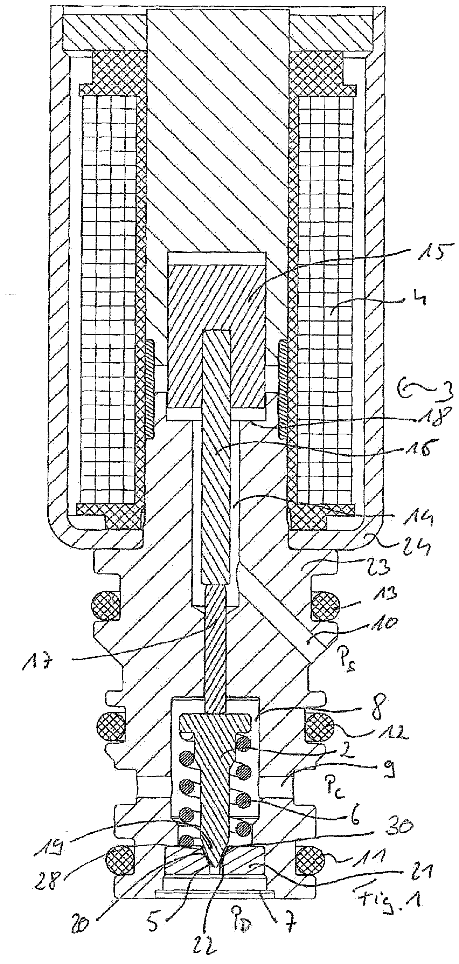

In Fig. 1 ist in einer Längsschnittansicht ein als Druckdifferenzventil für den Einsatz in CO₂-Klimakompressorenanordnungen ausgebildetes, elektromagnetisch aktuiertes (aktuierbares) Proportionalventil 1 gezeigt.

Dieses umfasst einen als Ventilstößel ausgebildeten Ventilkörper 2, der durch Bestromen eines elektromagnetischen Aktuators 3, genauer einer elektrischen Spulenanordnung 4 des Aktuators 3 axial relativ zu einem Ventilsitz 5, hier entgegen der Federkraft einer sich am Ventilkörper 2 abstützenden Rückstellfeder 6 axial auf den Ventilsitz 5 zu verstellbar ist.

Der Ventilsitz 5 ist einem ersten Druckanschluss 7 zugeordnet. Bei dem ersten Druckanschluss 7 handelt es sich um einen Hochdruckanschluss, an dem ein Hochdruck P_{D}, hier ein Kompressorförderdruck anliegt. Fluid, hier ein CO₂-Ölgemisch, kann bei von dem Ventilsitz 5 abgehobenem, d.h. in der Zeichnungsebene nach oben verstellten Ventilkörper 2 (und wie später noch erläutert werden wird auch bei an dem Ventilsitz 5 anliegendem Ventilkörper 2) an dem Ventilsitz 5 und dem Ventilkörper 2 vorbei in einen die Rückstellfeder 6 und den Ventilkörper 2 aufnehmenden Ventilkörperraum 8 (Abgabekammer) und von diesem zu einem zweiten Druckanschluss 9 strömen, an dem im Betrieb ein Kurbelwellendruck P_{C} anliegt.

Das Proportionalventil 1 weist einen weiteren, nämlich einen dritten Druckanschluss 10 auf, in welchem im Betrieb ein Saugdruck des Kompressors anliegt. Die Druckanschlüsse 7, 9, 10 sind über hier als O-Ringdichtungen ausgebildete, axial versetzte Dichtungen 11, 12, 13 fluiddicht gegeneinander abgedichtet.

Der dritte Druckanschluss 10 mündet in einem Raum 14, in welchem druckausgeglichen ein durch Bestromen der Spulenanordnung 4 axial verstellbarer Anker 15 axial druckausgeglichen aufgenommen ist.

In dem Anker 15 ist ein erster Stößel 16 aufgenommen zum Übertragen einer Verstellkraft auf einen, bevorzugt durchmesserreduzierten, zweiten Stößel 17, welcher sich wiederum axial an dem Ventilkörper 2 abstützt.

Aufgabe des gezeigten Proportionalventils ist es in seiner Funktion als Druckdifferenzregelventil proportional zu dem an die elektrische Spulenanordnung angelegten Strom eine bestimmte Druckdifferenz zwischen dem ersten und dem dritten Druckanschluss 7, 10 einzustellen, also eine Druckdifferenz zwischen P₀ und P_{S}. Durchströmt wird das Proportionalventil allerdings vom ersten zum zweiten Druckanschluss 7, 9, während der dritte Druckanschluss 10 nicht in der Ventil- bzw. Fluidströmung liegt, sondern als Druckrückführung für den Kompressorsaugdruck P_{S} genutzt wird.

Je nach Hub des Ventilkörpers 2 (Regelstift) relativ zum Ventilsitz 5 kann der Druckabfall von P_{D} nach P_{C} und in der Folge auch die System-Druckdifferenz in einer ansonsten nicht weiter dargestellten Klimakompressoranordnung von P_{D} nach P_{S} variiert werden.

Wird die Spulenanordnung 4 bestromt, führt dies zu einer Magnetkraft, die eine Ankerbaugruppe, hier konkret den Anker 15 zusammen mit den Stößein 16, 17 und dem Ventilkörper 2 in Richtung des Ventilsitzes 5 bewegt, wobei der Anker 15 in Richtung eines Kernbodens 18 verstellt wird. Die Bewegung des Ventilkörpers 2 und damit die gesamte Ankerbewegung erfolgt entgegen der Rückstellkraft der Rückstellfeder 6, wodurch sich der Ventilkörper 2 entgegen der Federkraft der Rückstellfeder 6 auf seinen Ventilsitz 5 bewegt. Der Anker 15 liegt dabei, wie bereits erwähnt, druckausgeglichen im Raum 14, der auf Saugdruck P_{S} liegt. Der zweite Stößel 17 trennt den auf Kurbelwellendruck P_{C} liegenden Ventilkörperraum 8 von dem auf Saugdruck P_{S} liegenden Raum 14. Da der Kurbelwellendruck P_{C} im Betrieb immer größer ist als der Saugdruck P_{S}, muss der elektromagnetische Aktuator 3 beim Verstellen des Ventilkörpers 2 in Richtung seines Ventilsitzes 5 auch die Druckkraft überwinden, welche durch die Druckdifferenz zwischen P_{C} und P_{S} auf den Stößel wird. Ändert sich der Saugdruck P_{S}, hat dies auch zwangsläufig Auswirkungen auf die Druckdifferenz zwischen P_{C} und P_{S}, die auf den zweiten Stößel 17 wirkt. Ändert sich somit der Saugdruck P_{S}, hat dies auch Auswirkungen auf die Gegenkraft, wodurch die Rückführung des Saugdrucks P_{S} in die Regelung gewährleistet ist. Zusätzlich zu der vorgenannten Gegenkraft muss der Magnet auch gegen die Rückstellkraft (Federkraft) der Rückstellfeder 6 und auch diejenigen Fluidkräfte arbeiten, welche auf den Ventilkörper 2 wirken. Hierbei handelt es sich in erster Linie um eine aus dem am ersten Druckanschluss 7 anliegenden Hochdruck (Förderdruck) P_{D} resultierende Druckkraft, mit welcher der Ventilkörper 2 beaufschlagt ist.

Zur Minimierung des Einflusses des am ersten Druckanschluss 7 anliegenden Druckes P_{D} auf die Verstellbewegung bzw. auf die notwendige Magnetkraft ist vorliegend vorgesehen, dass dem Ventilsitz 5 ein Diffusorraum 30 zugeordnet ist, der von einem Kegelabschnitt 19 des Ventilkörpers 2 begrenzt ist. Dieser Diffusorraum 30, der dem Ventilkörper 2 gegenüberliegend von einem eine Innenkonusfläche 28 aufweisenden Innenkonus 20 eines Blendenbauteils 21 begrenzt ist, ist bei an dem Ventilsitz 5 anliegenden Ventilkörper 2 fluidleitend mit dem ersten Druckanschluss 7 über eine direkte Fluidverbindung 22 verbunden, die von dem Ventilkörper 2 und in dem vorliegenden Ausführungsbeispiel zudem von dem Blendenbauteil 21 begrenzt ist. Das Blendenbauteil 21 kann beispielsweise durch Einpressen (oder sonstige Befestigungsmittel) in einen Körper 23 festgelegt sein, in weichem zum einen der Ventilkörperraum 8 als auch die drei Druckanschlüsse 7, 9, 10 eingebracht sind. An diesen Körper 23 ist auch der elektromagnetische Aktuator 3 mit seinem den magnetischen flussleitenden Gehäuse 24 festgelegt. Bei durch den Diffusorraum 30 von dem ersten Druckanschluss 7 zum zweiten Druckanschluss 9 strömendem Fluid wird aufgrund der Diffusorwirkung im Bereich des Kegelabschnittes 19 des Ventilkörpers 2 ein Niederdruckgebiet erzeugt, welches die durch den Hochdruck (Förderdruck) P_{D} verursachten Druckkräfte auf den Ventilkörper 2 von dem Ventilsitz 5 weg in Richtung Aktuator 3 auf einen vernachlässigbaren Wert reduziert. Durch die Realisierung der vorerwähnten, von dem Ventilkörper 2 begrenzten Fluidverbindung 22 und dem daraus resultierenden Fluidstrom auch im quasi-geschlossenen Zustand des Proportionalventils wird dieser Diffusoreffekt selbst bei am Ventilsitz 5 anliegendem Ventilkörper 2 aufrechterhalten.

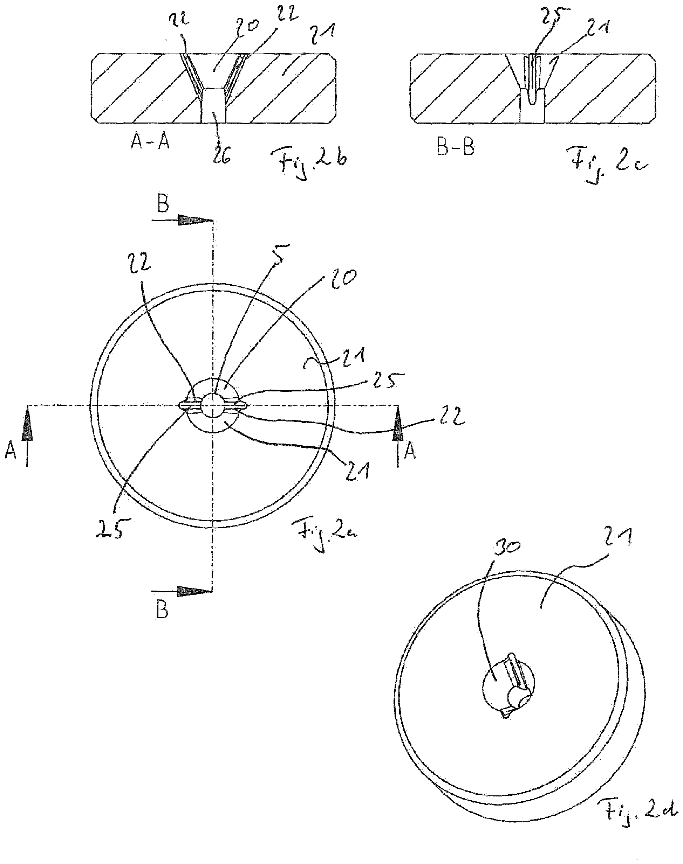

In den Fig. 2a bis 2d ist eine mögliche Ausführungsform eines Blendenbauteils 21 gezeigt. Zu erkennen ist ein Innenkonus 20 mit einer den Diffusorraum 30 begrenzenden Innenkonusfläche 28. Der Innenkonus 20 umschließt abschnittsweise den Ventilkörper 2 bzw. letzterer taucht axial in den Innenkonus 20 ein, um an dem in einem axialen Endbereich des Innenkonus 20 vorgesehenen Ventilsitz 5 anzuschlagen bzw. anzuliegen.
Zu erkennen sind hier beispielhaft zwei gegenüberliegende und sich entlang der Längserstreckung des Diffusorraums 30 erstreckende Einformungen als Bestandteil der Fluidverbindung 22, die gegenüberliegend von dem Ventilkörper 2 (hier nicht gezeigt) begrenzt ist und dafür Sorge trägt, dass der Diffusorraum 30 dauerhaft fluidleitend, insbesondere auch bei an dem Ventilsitz 5 anliegendem Ventilkörper 2 mit dem ersten Druckanschluss 7 (vgl. Fig. 1) und damit mit dem Hochdruck P_{D} verbunden ist.

Wie sich aus der Schnittansicht A - A gemäß Fig. 2b ergibt, mündet der Innenkonus 20 in einen zylinderförmigen Kanal 26, der die fluidleitende Verbindung zwischen den Fluidverbindungen 22 und dem ersten Druckanschluss 7 bildet.

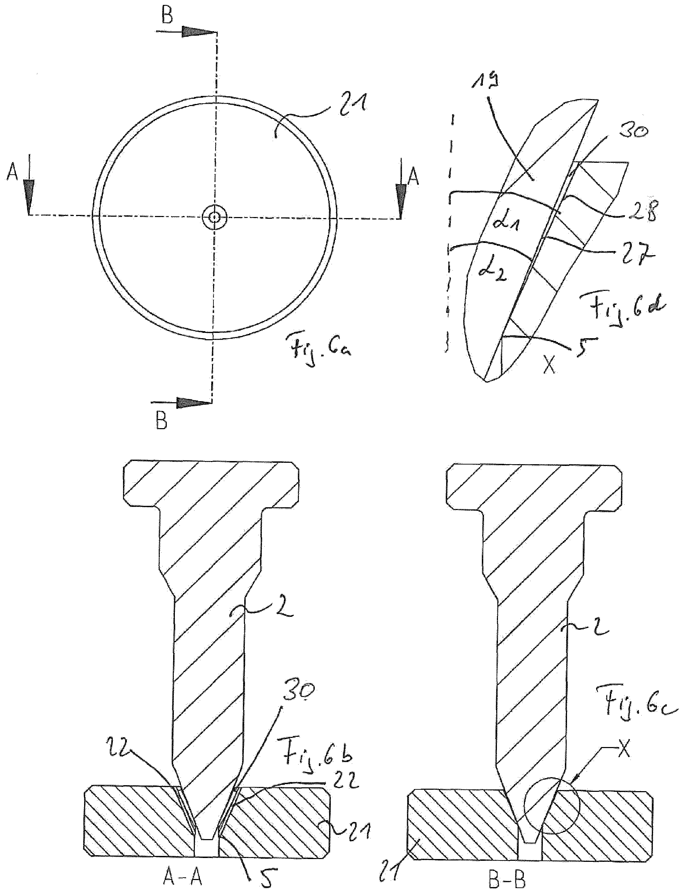

In den Fig. 6a bis 6d ist im Detail anhand der Fig. 2a bis 2d das beschriebene Blendenbauteil 21 in Kombination mit einem als Ventilstößel ausgebildeten Ventilkörper 2 gezeigt.

Aus der Detailvergrößerung X gemäß Fig. 6d ist zu erkennen, dass ein Konuswinkel, genauer ein Innenkonuswinkel α1 der Innenkonusfläche 28, die den Diffusorraum 30 begrenzt geringfügig größer ist als ein Konuswinkel a2 einer von dem Kegelabschnitt 19 (vgl. Fig. 1) gebildeten konischen Mantelfläche 27, die zusammen mit der Innenkonusfläche 28 den Diffusorraum 30 begrenzt.

In Fig. 6b sind die Fluidverbindungen 22 zu erkennen, über die der Diffusorraum 30 dauerhaft, d.h. auch bei an dem Ventilsitz 5 anliegendem Ventilkörper 2 mit Fluid aus dem ersten Druckanschluss 7 versorgt wird.

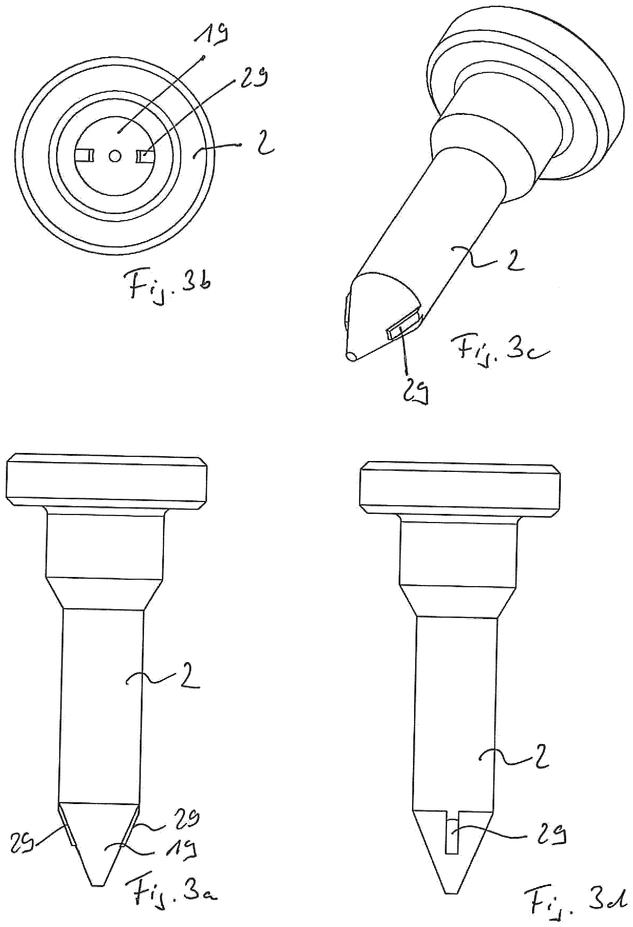

Anhand der Fig. 3a bis 3d wird eine alternative Möglichkeit zur Ausbildung der Fluidverbindung 22 zwischen dem Diffusorraum 30 und dem ersten Druckanschluss ersichtlich. Zu erkennen ist, dass an dem Ventilkörper 2, hier im Bereich des Kegelabschnittes 19 gleichmäßig und im Umfang verteilt angeordnete, hier beispielhaft langgestreckte Abstandserhebungen 29 vorgesehen sind, mit denen sich der Ventilkörper 2, insbesondere an einem Blendenbauteil 21, insbesondere innerhalb eines Innenkonus 20 abstützen kann. Der Bereich in Umfangsrichtung zwischen den Abstandserhebungen 29 ist hierdurch etwas beabstandet von dem Innenkonus 20, so dass eine dauerhafte Fluidverbindung 22 sichergestellt ist.

Eine weitere Möglichkeit zur Realisierung der Fluidverbindung 22 besteht darin, Materialeinformungen oder Ausfräsungen, hier in der Art von langgestreckten Nuten am Ventilkörper 2, insbesondere im Bereich eines Kegelabschnittes 19 vorzusehen, durch die Fluid auch bei an dem Ventilsitz 5 anliegendem Ventilkörper 2 in den vom Ventilkörper 2 begrenzten Diffusorraum 30 strömen kann.

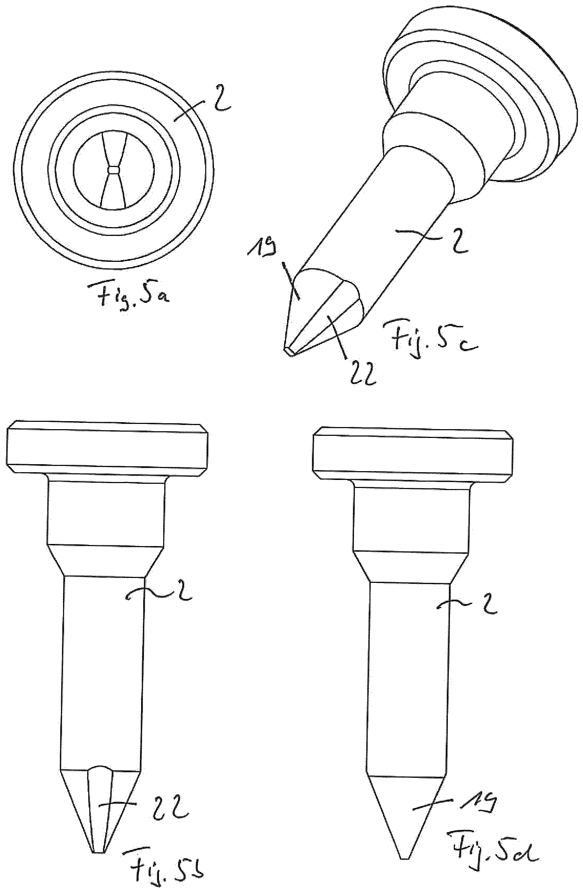

In den Fig. 5a bis 5d ist eine weitere alternative Bauweise von Fluidverbindungen 22 in der Form von seitlichen Abflachungen am Ventilkörper 2, bevorzugt in einem Kegelabschnitt 19 realisiert.

### Bezugszeichenliste

- 1: Proportionalventil
- 2: Ventilkörper
- 3: elektromagnetischer Aktuator
- 4: Spulenanordnung
- 5: Ventilsitz
- 6: Rückstellfeder
- 7: erster Druckanschluss
- 8: Ventilkörperraum
- 9: zweiter Druckanschluss
- 10: dritter Druckanschluss
- 11: Dichtung
- 12: Dichtung
- 13: Dichtung
- 14: Raum
- 15: Anker
- 16: erster Stößel
- 17: zweiter Stößel
- 18: Kernboden
- 19: Kegelabschnitt
- 20: Innenkonus
- 21: Blendenbauteil
- 22: Fluidverbindung (Fluidkanal)
- 23: Körper
- 24: Gehäuse
- 25: Einformung
- 26: Kanal
- 27: konische Mantelfläche
- 28: Innenkonusfläche
- 29: Abstanderhebungen
- 30: Diffusorraum

- P_{D}: Hochdruck (Förderdruck)
- P_{C}: Kurbelwellendruck
- P_{S}: Saugdruck

## Patentansprüche

1. Elektromagnetisch aktuierbares Proportionalventil (1), insbesondere Druckdifferenzventil für den Einsatz in CO₂-Klimakompressoranordnungen, umfassend einen elektromagnetischen Aktuator (3) zum Verstellen eines Ventilkörpers (2) relativ zu einem Ventilsitz (5), wobei dem Ventilsitz (5) ein erster Druckanschluss (7) zugeordnet ist, über den ein Fluid am Ventilkörper (2) vorbei zu einem zweiten Druckanschluss (9) strömen kann, wobei von dem Ventilkörper (2) ein Diffusorraum (30) begrenzt ist, der bei an dem Ventilsitz (5) anliegendem Ventilkörper (2) fluidleitend mit dem ersten Druckanschluss (7) über eine von dem Ventilkörper (2) begrenzte Fluidverbindung (22) verbunden ist,
**dadurch gekennzeichnet,**
**dass** der Ventilkörper (2) in einem den Diffusorraum (30) begrenzenden Abschnitt eine konische Mantelfläche (27) aufweist, und dass dem Ventilkörper (2) eine den Ventilkörper (2) abschnittsweise radial außen umschließende Innenkonusfläche (28) zugeordnet ist, welche den Diffusorraum (30) begrenzt und dass ein Konuswinkel der konischen Mantelfläche (27) kleiner ist als der Konuswinkel der Innenkonusfläche (28).

2. Proportionalventil nach Anspruch 1,
**dadurch gekennzeichnet,**
**dass** der Konuswinkel der konischen Mantelfläche (27), um einen Winkel aus einem Winkelbereich zwischen 0,1° und 30°, weiter bevorzugt zwischen 0,5° und 10° kleiner ist als der Konuswinkel der Innenkonusfläche (28).

3. Proportionalventil nach einem der Ansprüche 1 oder 2,
**dadurch gekennzeichnet,**
**dass** der Ventilkörper (2) als Ventilstößel ausgebildet ist.

4. Proportionalventil nach einem der vorhergehenden Ansprüche,
**dadurch gekennzeichnet,**
**dass** die Innenkonusfläche (28) an einem den Ventilsitz (5) ausbildenden Blendenbauteil (21) ausgebildet ist.

5. Proportionalventil nach einem der vorhergehenden Ansprüche,
**dadurch gekennzeichnet,**
**dass** sich der Diffusorraum (30) bei an dem Ventilsitz (5) anliegendem Ventilkörper (2) mit einem Öffnungswinkel, aus einem Wertebereich zwischen 10° und 35°, bevorzugt zwischen 15° und 25°, bevorzugt über eine Länge zwischen 0,5mm und 10mm, weiter bevorzugt zwischen 1mm und 4mm.

6. Proportionalventil nach einem der vorhergehenden Ansprüche,
**dadurch gekennzeichnet,**
**dass** die Fluidverbindung (22) eine, vorzugsweise durch Materialumformung, weiter bevorzugt durch Prägen hergestellte, Einformung (25) oder eine, vorzugsweise materialabtragend hergestellte Abflachung im/am Ventilkörper (2) und/oder einem den Ventilsitz (5) ausbildenden Bauteil, insbesondere einem Blendenbauteil (21), umfasst.

7. Proportionalventil nach einem der vorhergehenden Ansprüche,
**dadurch gekennzeichnet,**
**dass** zur Ausbildung der Fluidverbindung (22) eine, vorzugsweise über eine Mantelfläche des Ventilkörpers (2) vorstehende, Abstandserhebung (29) vorgesehen ist.

8. Proportionalventil nach einem der vorhergehenden Ansprüche,
**dadurch gekennzeichnet,**
**dass** ein einen Anker (15) des elektromagnetischen Aktuators (3) und/oder einen Kraftübertragungsstößel zum Verstellen des Ventilkörpers (2) aufnehmender Raum (14) fluidleitendend mit einem dritten Druckanschluss (10), insbesondere einem Saugdruckanschluss, verbunden ist.

9. Proportionalventil nach einem der vorhergehenden Ansprüche,
**dadurch gekennzeichnet,**
**dass** der Ventilkörper (2), vorzugsweise entgegen einer, weiter bevorzugt von einer Rückstellfeder einbringbaren, Rückstellkraft, durch Bestromen einer Spulenanordnung (4) des elektromagnetischen Aktuators (3) auf den Ventilsitz (5) verstellbar ist.

10. Klimakompressoranordnung, insbesondere in einem Kraftfahrzeug, mit einem als Druckdifferenzventil ausgebildeten Proportionalventil (1) nach einem der vorhergehenden Ansprüche und einem Klimakompressor, wobei an dem ersten Druckanschluss (7) ein Förderdruck des Klimakompressors und dem zweiten Druckanschluss (9) ein Kurbelwellendruck (P_{C}) anlegbar ist und/oder anliegt.

11. Klimakompressoranordnung nach Anspruch 10,
**dadurch gekennzeichnet,**
**dass** an einem dritten Druckanschluss (10) des Proportionalventils, (1) der fluidleitend mit einem einen Anker (15) des elektromagnetischen Aktuators (3) und/oder einen Kraftübertragungsstößel zum Verstellen des Ventilkörpers (2) aufnehmenden Raum (14) verbunden ist, ein Saugdruck (P_{S}) des Klimakompressors anlegbar ist und/oder anliegt.

12. Verfahren zum Betreiben eines elektromagnetisch aktuierten Proportionalventils (1) nach einem der Ansprüche 1 bis 9, und/oder einer Klimakompressoranordnung nach einem der Ansprüche 10 oder 11,
**dadurch gekennzeichnet,**
**dass** der Diffusorraum (30) bei an dem Ventilsitz (5) anliegendem Ventilkörper (2) mit Fluid, insbesondere einem CO₂-Ölgemisch aus dem ersten Druckanschluss (7) versorgt wird, welches weiter zum zweiten Druckanschluss (9) strömt und durch Durchströmen des Diffusorraums (30) die von dem ersten Fluidanschluss auf den Ventilkörper (2) wirkende Fluidruckkraft reduziert.

## Claims

1. An electromagnetically actuatable proportional valve (1), in particular differential pressure valve for use in CO₂ air conditioning compressor arrangements, comprising an electromagnetic actuator (3) for adjusting a valve body (2) relative to a valve seat (5), the valve seat (5) being assigned a first pressure connection (7) via which a fluid can flow bypassing the valve body (2) to a second pressure connection (9), the valve body (2) delimiting a diffusor chamber (30) which, with the valve body (5) lying against the valve seat (2) is connected in a fluid-conducting manner with the first pressure connection (7) via a fluid connection (22) delimited by the valve body (2),
**characterized in that**
the valve body (2) has a conical lateral surface (27) in a section delimiting the diffusor chamber (30), and that the valve body (2) is assigned an internal cone surface (28) which in sections encloses the valve body (2) radially on the outside and which delimits the diffusor chamber (30) an that a cone angle of the conical lateral surface (27) is smaller than the cone angle of the internal cone surface (28).

2. The proportional valve according to claim 1,
**characterized in that**
the cone angle of the conical lateral surface (27) is smaller than the cone angle of the internal cone surface (28) by an angle from the angular range between 0.1° and 30°, preferably between 0.5° and 10°.

3. The proportional valve according to claim 1 or 2,
**characterized in that**
the valve body (2) is realized as a valve plunger.

4. The proportional valve according to any one of the preceding claims,
**characterized in that**
the internal cone surface (28) is formed on an orifice component (21) forming the valve seat (5).

5. The proportional valve according to any one of the preceding claims,
**characterized in that**
the diffusor chamber (30), with the valve body (2) lying against the valve seat (5), opens by an opening angle from a value range between 10° and 35°, preferably between 15° and 25°, preferably over a length between 0.5 mm and 10 mm, more preferably between 1 mm and 4 mm.

6. The proportional valve according to any one of the preceding claims,
**characterized in that**
the fluid connection (22) comprises a shaped recess (25), preferably obtained by material deformation, more preferably by embossing, or a flat, preferably obtained by material abrasion, in/on the valve body (2) and or a component, in particular an orifice component (21), forming the valve seat (5).

7. The proportional valve according to any one of the preceding claims,
**characterized in that**,
for forming the fluid connection (22), a distance elevation (29), preferably protruding beyond the lateral surface of the valve body (2), is provided.

8. The proportional valve according to any one of the preceding claims,
**characterized in that**
a chamber (14) receiving an armature (15) of the electromagnetic actuator (3) and/or a force transmission plunger for adjusting the valve body (2) is connected in a fluid-conducting manner with a third pressure connection (10), in particular a suction pressure connection.

9. The proportional valve according to any one of the preceding claims,
**characterized in that**
the valve body (2) is adjustable onto the valve seat (5) by energizing a coil arrangement (4) of the electromagnetic actuator (3), preferably against a reset force, more preferably applied by a return spring.

10. An air conditioning compressor arrangement, in particular in a motor vehicle, having a proportional valve (1) designed as a differential pressure valve according to any one of the preceding claims and an air conditioning compressor, wherein a delivery pressure of the air conditioning compressor can be applied and/or is applied to the first pressure connection (7) and a crankshaft pressure (P_{C}) can be applied and/or is applied to the second pressure connection (9).

11. The air conditioning compressor arrangement according to claim 10,
**characterized in that**
a suction pressure (Pₛ) of the air conditioning compressor can be applied and/or is applied to a third pressure connection (10) of the proportional valve (1) which is connected to a chamber (14) receiving an armature (15) of the electromagnetic actuator (3) and/or a force transmission plunger for adjusting the valve body (2) in a fluid-conducting manner.

12. A method for operating an electromagnetically actuated proportional valve (1) according to any one of claims 1 to 9, and/or an air conditioning compressor arrangement according to claim 10 or 11,
**characterized in that**
the diffusor chamber (30), with the valve body (2) lying against the valve seat (5), is supplied with fluid, in particular a CO₂-oil mixture, from the first pressure connection (7), which flows to the second pressure connection (9) and which reduces the fluid pressure force acting from the first fluid connection onto the valve body (2) by flowing through the diffusor chamber (30).

## Revendications

1. Soupape proportionnelle (1) à actionnement électromagnétique, notamment une soupape à pression différentielle destinée à l'utilisation dans des ensembles compresseurs de climatisation CO₂, la soupape proportionnelle comprenant un actionneur électromagnétique (3) permettant de déplacer un corps de soupape (2) par rapport à un siège de soupape (5), un premier raccord de pression (7), par l'intermédiaire duquel un fluide peut circuler devant le corps de soupape (2) vers un deuxième raccord de pression (9), étant assigné au siège de soupape (5), le corps de soupape (2) délimitant une chambre de diffusion (30) qui est en communication fluidique avec le premier raccord de pression (7) par l'intermédiaire d'une liaison fluidique (22) délimitée par le corps de soupape (2) quand le corps de soupape (2) repose sur le siège de soupape (5),
**caractérisée en ce que**
le corps de soupape (2) a une surface latérale (27) conique dans une partie qui délimite la chambre de diffusion (30), et qu'une surface de cône intérieur (28) qui entoure le corps de soupape (2) par sections à l'extérieur radial est assignée au corps de soupape (2), la surface de cône intérieur délimitant la chambre de diffusion (30), et qu'un angle de cône de la surface latérale (27) conique est inférieur à l'angle de cône de la surface de cône intérieur (28).

2. Soupape proportionnelle selon la revendication 1,
**caractérisée en ce que**
l'angle de cône de la surface latérale (27) conique est inférieur à l'angle de cône de la surface de cône intérieur (28) d'un angle d'une plage angulaire entre 0,1° et 30°, de préférence entre 0,5° et 10°.

3. Soupape proportionnelle selon la revendication 1 ou la revendication 2,
**caractérisée en ce que**
le corps de soupape (2) est réalisé comme poussoir de soupape.

4. Soupape proportionnelle selon l'une quelconque des revendications précédentes,
**caractérisée en ce que**
la surface de cône intérieur (28) est réalisée sur un composant de diaphragme (21) qui réalise le siège de soupape (5).

5. Soupape proportionnelle selon l'une quelconque des revendications précédentes,
**caractérisée en ce que**
la chambre de diffusion (30) s'ouvre à un angle d'ouverture d'une plage entre 10° et 35°, de préférence entre 15° et 25°, de préférence sur une longueur entre 0,5 mm et 10 mm, plus préférentiellement entre 1 mm et 4 mm, quand le corps de soupape (2) repose sur le siège de soupape (5).

6. Soupape proportionnelle selon l'une quelconque des revendications précédentes,
**caractérisée en ce que**
la liaison fluidique (22) comprend un moule (25), de préférence obtenu par la déformation de matière, plus préférentiellement par estampage, ou un méplat, de préférence réalisé par l'enlèvement de matière, dans/sur le corps de soupape (2) et/ou dans un composant, notamment un composant de diaphragme (21), qui réalise le siège de soupape (5).

7. Soupape proportionnelle selon l'une quelconque des revendications précédentes,
**caractérisée en ce**
**qu'**un soulèvement d'écart (29) qui fait saillie, de préférence, d'une surface latérale du corps de soupape (2) est prévu afin de réaliser la liaison fluidique (22).

8. Soupape proportionnelle selon l'une quelconque des revendications précédentes,
**caractérisée en ce**
**qu'**une chambre (14) qui reçoit un induit (15) de l'actionneur (3) électromagnétique et/ou un poussoir de transmission de force destiné à déplacer le corps de soupape (2) est en communication fluidique avec un troisième raccord de pression (10), notamment un raccord de pression d'aspiration.

9. Soupape proportionnelle selon l'une quelconque des revendications précédentes,
**caractérisée en ce que**
le corps de soupape (2) peut être déplacé vers le siège de soupape (5) par l'alimentation en courant d'un ensemble de bobines (4) de l'actionneur (3) électromagnétique, de préférence contre une force de rappel, plus préférentiellement applicable par un ressort de rappel.

10. Ensemble compresseur de climatisation, notamment dans un véhicule, comprenant une soupape proportionnelle (1) selon l'une quelconque des revendications précédentes réalisée comme soupape à pression différentielle et un compresseur de climatisation, une pression de refoulement du compresseur de climatisation pouvant être et/ou étant appliquée au premier raccord de pression (7) et une pression de vilebrequin (P_{c}) pouvant être et/ou étant appliquée au deuxième raccord de pression (9)

11. Ensemble compresseur de climatisation selon la revendication 10,
**caractérisé en ce**
**qu'**une pression d'aspiration (Pₛ) du compresseur de climatisation peut être et/ou est appliquée à un troisième raccord de pression (10) de la soupape proportionnelle (1) qui est en communication fluidique avec une chambre (14) qui reçoit un induit (15) de l'actionneur (3) électromagnétique et/ou un poussoir de transmission de force destiné à déplacer le corps de soupape (2).

12. Procédé de fonctionnement d'une soupape proportionnelle (1) à actionnement électromagnétique selon l'une quelconque des revendications 1 à 9, et/ou un ensemble compresseur de climatisation selon la revendication 10 ou la revendication 11,
**caractérisé en ce que**
la chambre de diffusion (30) est alimentée en fluide, notamment un mélange CO₂-huile, du premier raccord de pression (7) quand le corps de soupape (2) repose sur le siège de soupape (5), ledit fluide s'écoulant vers le deuxième raccord de pression (9) et réduisant la pression de fluide appliquée au corps de soupape (2) par le premier raccord de fluide en traversant la chambre de diffusion (30).
